**Europäisches Patentamt**

**European Patent Office**

**Office européen des brevets**

(19)

(11) Veröffentlichungsnummer: **0 304 734 B1**

(12) **EUROPÄISCHE PATENTSCHRIFT**

(45) Veröffentlichungstag der Patentschrift:
24.04.91 Patentblatt 91/17

(51) Int. Cl.⁵: **C02F 11/04**

(21) Anmeldenummer: **88113093.4**

(22) Anmeldetag: **12.08.88**

(54) **Vorrichtung zur anaeroben Behandlung von Biomasse.**

(30) Priorität: **22.08.87 DE 3728031**

(43) Veröffentlichungstag der Anmeldung:
**01.03.89 Patentblatt 89/09**

(45) Bekanntmachung des Hinweises auf die
Patenterteilung:
**24.04.91 Patentblatt 91/17**

(84) Benannte Vertragsstaaten:
**AT CH DE FR GB IT LI NL SE**

(56) Entgegenhaltungen:
**EP-A- 0 274 633**
**DE-A- 1 759 102**
**DE-A- 3 345 595**
**DE-A- 3 607 520**

(73) Patentinhaber: **ME/BO/CO**
**VERFAHRENSTECHNIK GMBH & CO. KG**
**Finienweg 7**
**W-2807 Achim-Baden (DE)**

(72) Erfinder: **Born, Rainer, Dr.-Ing.**
**Querweg 27**
**W-2807 Achim (DE)**

(74) Vertreter: **Stark, Walter, Dr.-Ing.**
**Moerser Strasse 140**
**W-4150 Krefeld (DE)**

## Beschreibung

Die Erfindung betrifft eine Vorrichtung zur anaeroben Behandlung von Biomasse in einem Behälter, der flexible Materialstreifen als Bewuchsfläche für Mikroorganismen aufweist.

Bei der Aufbereitung bzw. Reinigung von Abwasser gibt es ein Verfahren, bei welchem eine biologische Reinigung des Abwassers durch den in dem Abwasser gelösten bzw. enthaltenen Sauerstoff erfolgt. Dieser Abbau wird als aerober Abbau bezeichnet, wobei ein Abbau der organischen Substanzen zu $CO_2$ und $H_2O$ stattfindet. Dieser biologische Abbau, der von verschiedenen Einflüssen abhängig ist, wird vor allem von der Zahl der Mikroorganismen, dem nutzbaren Sauerstoff und von der Temperatur bestimmt.

Außer diesem aeroben Abbau ist in vielen Fällen ein anderer biologischer Abbau bekannt, nämlich der unter Luftabschluß arbeitende anaerobe Abbau, der ein Faul- oder Gärfaulverfahren darstellt. Dieses Faulverfahren stellt einen biologischen Vorgang dar, bei dem Methangas erzeugt wird und das in einem Behälter unter Luftabschluß durchgeführt wird, wobei die "Biomasse" umgewälzt und erwärmt wird.

Die Deckung des Energiebedarfs dieses Prozesses erfolgt zum Teil durch die Zerfallsenergie der abgebauten organischen Substanzen aufgrund der Einwirkung der Mikroorganismen.

Das anaerobe Faul- oder Gärfaulverfahren wird beispielsweise neuerdings verwandt zur Energieversorgung der Bevölkerung in warmen, jedoch brennstoffarmen Gegenden, und es besteht daher das Bedürfnis, dieses Verfahren weiter zu vervollkommnen mit dem Ziel erhöhter Methangasgewinnung.

Eine Vorrichtung der eingangs beschriebenen Gattung (DE 36 07 520 A1) kann neben starren Bewuchsflächen auch flexible Bewuchsflächen aus Gewebematerial aufweisen. Mit Hilfe der starren Bewuchsflächen soll ein bestimmter Strömungsverlauf der Biomasse im Behälter erzeugt werden. Die flexiblen Bewuchsflächen liegen auf dem Boden des Behälters auf und werden von abgelagerten Feinstoffen zugesetzt. Das erfordert eine aufwendige Konstruktion, die sich für die Energieversorgung der Bevölkerung in warmen und brennstoffarmen Gegenden kaum eignet.

Aufgabe der Erfindung ist es, eine Vorrichtung der eingangs beschriebenen Gattung konstruktiv zu vereinfachen und gleichzeitig die damit erreichbare Methangasgewinnung zu verbessern.

Diese Aufgabe wird dadurch gelöst, daß die Materialstreifen Kunststoffstreifen sind, die im oberen Bereich des Behälters aufgehängt und durch an ihren unteren Enden angreifende Gewichtskräfte gespannt sind. Die Kunststoffstreifen können insbesondere aus einem Polyolefin oder aus einem PVC-Kunststoff bestehen.

Das Wort "Streifen" soll ein Gebilde bezeichnen, welches ein großes Längen/Breiten-Verhältnis hat. Die Länge der Streifen richtet sich nach der Höhe der Faulbehälter, und die Breite ist dann so bemessen, daß sich in dem Behälter eine möglichst große Oberfläche erzeugen läßt. Das Ausspannen der Streifen geschieht dadurch, daß sie mit ihren oberen und unteren Enden zwischen Einrichtungen befestigt sind, die am oberen bzw. unteren Ende innerhalb des Faulbehälters angeordnet sind. Die Streifen können also an ihren oberen Enden an Stangen befestigt sein, beispielsweise durch Anklemmen, und ihre unteren Enden können ebenso an Stangen befestigt sein, die lediglich aufgrund ihres Gewichtes, also unter dem Einfluß der Schwerkraft, diese Kunststoffstreifen ausspannen. Die Befestigung der oberen Stangen erfolgt in geeigneter Weise an einem Einbau oder an Einbauten im Faulbehälter oder an den den Faulbehälter verschließenden Deckel. So können in dem Faulbehälter in der Nähe seines oberen Endes Konsolen oder Auflager angeordnet sein, auf denen die Stangen mit den daran befestigten Kunststoffstreifen nebeneinanderliegend angeordnet sind, so daß sich zwischen den einzelnen Streifen und den Stangen ein Raum ergibt, der einen guten Durchgang der zu behandelnden Biomasse gewährleistet.

Durch die Anordnung dieser Kunststoffstreifen wird eine große Oberfläche erhalten, auf der sich offensichtlich der anaerobe Faulvorgang mit einem höheren Wirkungsgrad abspielen kann als in einem Behälter ohne derartige Einbauten. Durch die Ausspannung der Streifen, die außerdem profiliert oder strukturiert sein können, beispielsweise durch Erzeugung von rillenförmigen Vertiefungen bzw. entsprechenden Erhebungen auf der anderen Seite oder durch Perforarionen in Form von kreisförmigen und länglichen Löchern, werden diese durch die Turbulenz, die in einem solchen Behälter herrscht, zufolge der Umwälzung der darin befindlichen Biomasse nicht zur Seite oder nach oben aufgeschwemmt, sondern Unterteilen dem Behälterinnenraum in entsprechende, sehr effektive Räume bzw. Schichten der Biomasse, so daß der anaerobe Faulprozeß mit hohem Wirkungsgrad sich abspielen kann.

Ein solcher anaerober Abbau in der erfindungsgemäßen Vorrichtung kann in vorteilhafter Weise zusammen mit einer Belebtschlammanlage betrieben werden, in der ja zumindest ein Teil der zu eliminierenden organischen Substanz durch die stattfindende Umwandlung zu einer Vermehrung der Schlammmenge führt, die dann einem anaeroben Abbau in dieser erfindungsgemäßen Vorrichtung unterzogen wird.

Die Erfindung wird nun anhand eines Ausführungsbeispiels, welches in der Zeichnung dargestellt ist, näher erläutert.

In Fig. 1 ist ein Faulbehälter für einen anaeroben Faulprozeß schematisch dargestellt, in welchem die erfindungsgemäßen Vorrichtungen enthalten sind,

Fig. 2 zeigt eine Draufsicht auf den Behälter, ebenfalls schematisch,

Fig. 3 zeigt Möglichkeiten der Ausgestaltung der Streifen in der Ansicht und im Schnitt,

Fig. 4 zeigt die in den Faulbehälter einzuhängenden Streifen mit ihrer Befestigung,

Fig. 5 eine Seitenansicht unter 90° zu der Darstellung nach Fig. 4 und

Fig. 6 eine andere Art der Befestigung der Streifenenden.

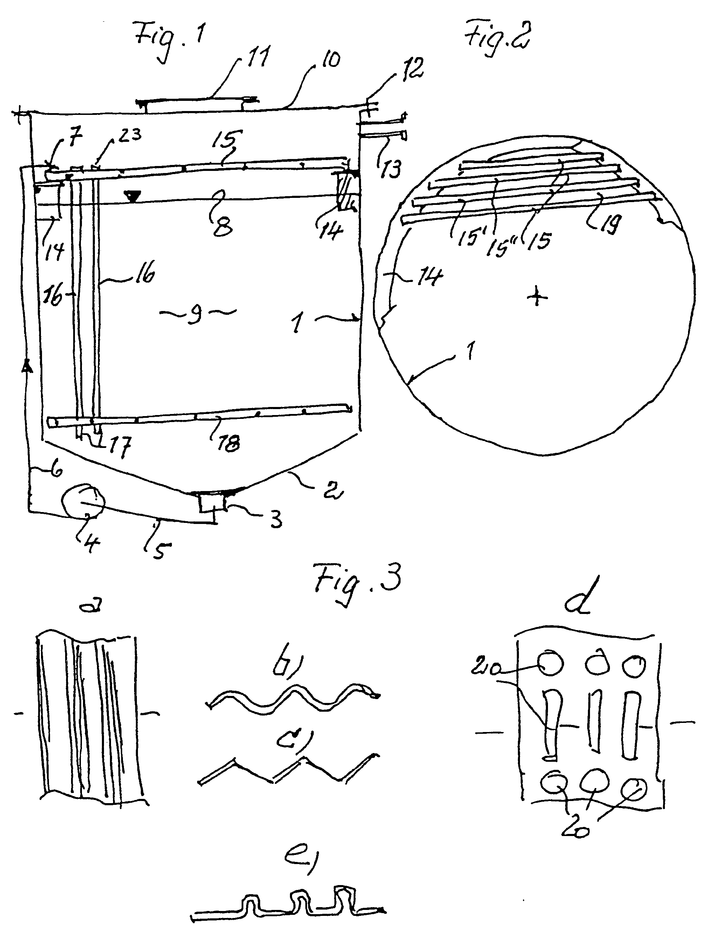

In Fig. 1 ist der Behälter schematisch in der Seitenansicht bzw. einem Vertikalschnitt dargestellt. Er trägt das Bezugszeichen 1. Der Behälter hat einen konischen Boden 2 mit einer Ablaßöffnung 3, aus der auch eine Pumpe 4 über die Leitung 5 Masse absaugt und über die Leitung 6 oben in den Behälter bei 7 wieder hineindrückt. Das obere Ende der Leitung 6 kann entsprechend zugeführt werden, oder es können Einrichtungen vorgesehen sein, mit denen die Masse möglichst gleichmäßig über die gesamte Oberfläche 8 der Masse 9, die sich im Behälter 1 befindet, verteilt wird. Das obere Ende des Behälters ist durch einen Deckel 10 verschlossen. Bei 11 kann eine Inspektionsöffnung vorhanden sein. Der Deckel 11 ist mit Schrauben bei 12 mit dem Behälter verbunden, beispielsweise über Flansche, und bei 13 kann eine Auslaßöffnung für erzeugte Gase vorgesehen sein.

Im Innern des Behälters sind Einbauten 14, beispielsweise durch Anschweißen eines Flansches oder eines Winkels, geschaffen, auf denen Stangen 15 mit ihren Enden aufliegen. Diese Stangen werden weiter unten noch ausführlich beschrieben. Sie bestehen beispielsweise aus irgendeinem geeigneten Material. An diesen Stangen sind Kunststoffstreifen 16 befestigt, von denen nur einige wenige in Fig. 1 dargestellt sind. Auch auf diese Streifen wird weiter unten noch eingegangen. Die unteren Enden 17 der Streifen sind an Stangen 18 befestigt. Diese Stangen, die in der gärenden Masse 9 liegen, bestehen aus Bongossi- oder Eisenholz und haben ein beträchtliches Gewicht, so daß sie diese Kunststoffstreifen 16 unter dem Einfluß der Schwerkraft gespannt halten.

In Fig. 2 sind die Stangen 15 im oberen Ende des Behälters 1 gezeigt, wie sie dicht nebeneinander, jedoch unter Belassung ausreichenden Zwischenraums 19, auf die Einbauten 14 mit ihren Enden aufgelegt sind. Die Einbauten 14 sind in Fig. 2 nur über ein Teil des inneren Umfangs gezeigt der Übersicht wegen.

In Fig. 3 sind die Streifen 16 nun ausführlicher dargestellt.

Die Streifen bestehen aus einem Kunststoff, beispielsweise aus einem Polyolefin, wie Polyethylen oder aus einem anderen Kunststoff und können in einfachster Ausgestaltung glatte Kunststoffstreifen sein. Die Farbe ist ohne Bedeutung. Die Oberfläche kann glatt, aber auch rauh sein. Der Streifen hat eine Länge, die, wie Fig. 1 veranschaulicht, der Größe des Faulbehälters angepaßt ist und eine Breite, die sich ebenfalls nach Abmessungen dieses Faulbehälters, insbesondere im Durchmesser, richtet. Die Streifen können aber auch wie in Fig. 3a bis 3c gewellt oder zickzackförmig sein, so daß sich eine relativ große Oberfläche bei relativ geringer räumlicher Breitenausdehnung ergibt.

In Fig. 3d ist ein Streifen dargestellt, der mit Einprägungen 20 versehen ist, so daß sich im Schnitt eine Form wie etwa in Fig. 3e gezeigt ergibt, was sich bei thermoplastischen Kunststoffen sehr leicht bewerkstelligen läßt und was ebenfalls der Schaffung einer möglichst großen Oberfläche dient.

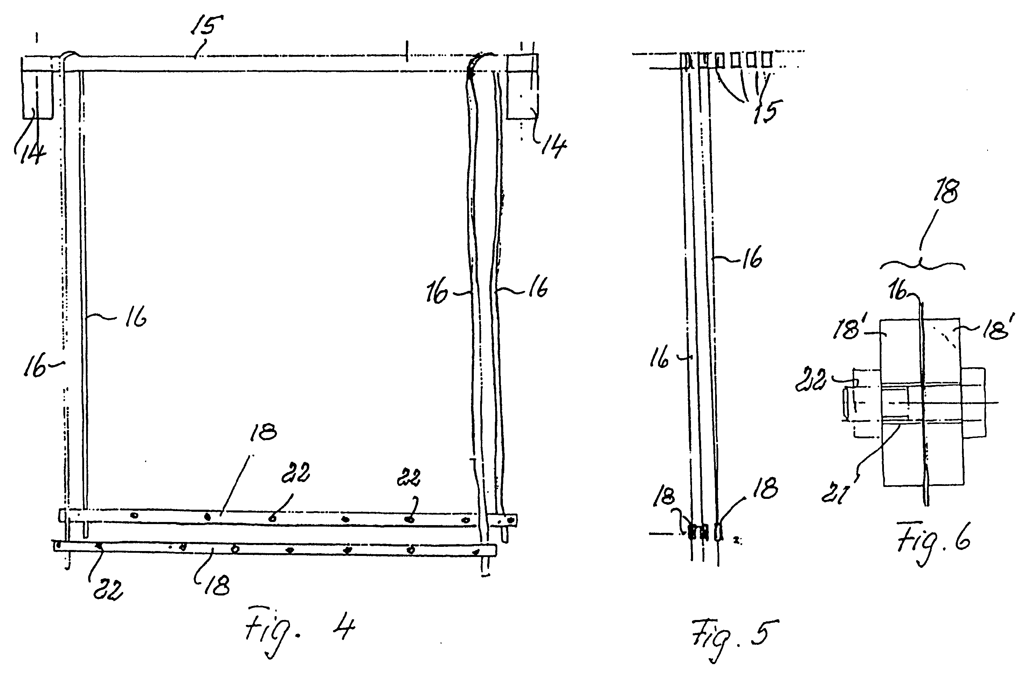

Die Streifen, die in einer sehr großen Anzahl in dem Behälter ausgespannt sind, beispielsweise unter dem Einfluß der Schwerkraft, wie in Fig. 1 dargestellt, sind nun ausführlicher in Fig. 4 dargestellt. Die Streifen 16 sind hier über eine obere Tragstange 15 geführt, und ihre Enden befinden sich nahe dem unteren Ende des Behälters und sind dort mit diesen Eisenholzstangen 18 verbunden, und zwar wie in Fig. 6 gezeigt.

Die Stange 18 nach Fig. 4 bzw. 1 besteht aus zwei Eisenholzleisten 18', die bei 21 durchbohrt sind und vermittels Mutternschrauben 22 zusammengepreßt werden. Zwischen den beiden Leisten 18' sind nun die Kunststoffstreifen eingeklemmt, entweder jeweils ein Ende, wie in Fig. 4 gezeigt oder beide Enden, wie das in Fig. 1 dargestellt sein soll.

Da die Leisten 18 aus Eisenholz bestehen und ein beträchtliches Gewicht haben, werden die Streifen 16, wie in Fig. 4, links, gezeigt, stramm gehalten. Außerdem erstrecken sich die Stangen durch den gesamten lichten Innenraum des Behälters, wobei sie in ihrer Länge, je nach der Länge der Sehne, die sie zum Behälter bilden, unterschiedlich lang sind, so daß sie jeweils mit ihren beiden Enden kurz vor der inneren Oberfläche des Behälters enden.

Das bedeutet, daß durch das Gewicht der Leisten 18 und ihrer sehnenartigen Ausdehnung von einer Behälterwand zur anderen die Streifen trotz der durch das Umpumpen der Masse 9 erzeugten Turbulenz immer stramm gehalten werden und immer Strömungskanäle in der Masse und oberhalb der Oberflächen der Streifen aufrechterhalten bleiben.

Diese Art der Ausgestaltung eines Innenraums hat sich besonders vorteilhaft auf den Wirkungsgrad solcher Anlagen bzw. Faulbehälter ausgewirkt.

Die Aufhängung der oberen Enden 23 (Fig. 1) der Streifen 16 kann natürlich auch so erfolgen wie die Verbindung der unteren Enden der Streifen mit den Stangen 18. Sie können also zwischen Leisten gemäß Fig. 6 eingeklemmt sein.

Natürlich ist auch jede andere Art der Befestigung der oberen Enden und der unteren Enden der Streifen an Tragelementen möglich, beispielsweise durch Aufhängen auf Haken oder durch Ausbildung von Schlaufen, durch die Stangen oder Tragelemente hindurchgesteckt werden.

Es ist ferner möglich, die Auflager 14 wegzulassen und die Stangen 15, an denen die oberen Enden 23 der Streifen befestigt sind, direkt über geeignete Zwischenelemente an dem Deckel 10 des Faulbehälters zu befestigen.

Wichtig allein ist, daß möglichst eine große Oberfläche durch Streifen in der Masse erzeugt werden, und daß die Streifen möglichst unbeeinflußt von irgendwelchen Turbulenzen und Strömungen ihre Lage im Behälterinnenraum beibehalten.

Der Behälter braucht auch nicht wie in Fig. 1 und 2 gezeigt, kreisförmigen Querschnitt haben, er kann rechteckig oder quadratisch, polygonal sein oder sonst welche Gestalt haben, die für den gewünschten Zweck praktikabel ist.

Außer der Erzeugung einer großen Oberfläche ist die Ausgestaltung auch noch deshalb von großem technischem Fortschritt, weil die Streifen bzw. die Einbauten leicht herausnehmbar, auswechselbar und inspizierbar sind. Insbesondere bei Betrachtung der Fig. 2, 4 und 5 wird erkennbar, daß beispielsweise unter Berücksichtigung von Fig. 2 die Stangen 15' und 15" entfernt werden können, ohne daß die benachbarten Stangen mit den darauf liegenden Streifen irgendwie beeinträchtigt werden.

Oben in der Beschreibung ist ausgeführt, daß es allein darauf ankommt, daß die Streifen in großer Vielzahl angeordnet sind, daß sie gespannt sind, daß der Auftriebskraft entgegengewirkt ist und daß sie trotz evtl. Turbulenzen des Inhalts des Behälters gerade herunterhängen bleiben, also gespannt sind.

Diese Funktion des Spannens der Streifen geschieht beispielsweise gemäß Fig. 1 durch Stangen, an denen die Enden der Streifen befestigt sind und die zufolge ihrer Schwerkraft die Streifen gespannt halten. Statt der Stangen 18 können natürlich auch andere Mittel verwandt werden, beispielsweise Gewichte aus Eisen oder Keramik, die an den Enden 17 der Streifen befestigt sind. So kann jedes Streifenende 17 mit einem Gewicht versehen sein oder wie in Fig. 5 können zwei oder mehrere Enden mit einem Gewicht belastet sein. Diese individuelle oder gruppenweise Belastung der Enden 17 der Streifen hätte den Vorteil, daß keine Stangen im unteren Teil des Behälters vorhanden sind oder ein Rost vorhanden ist, also keine Einbauten. Das Wort "gespannt" oder "ausgespannt", wie es zur Kennzeichnung der erfindungsgemäßen Anordnung der Streifen verwandt wird, soll bedeuten, daß die Streifen gerade herunterhängen, sich nicht wendeln oder sogenannte Kinken bilden, sondern so gerade wie in Fig. 1 und 4 gezeigt. Darüber hinaus können diese Streifen natürlich profiliert sein, wie das mit Bezug auf Fig. 3 beschrieben ist.

## Ansprüche

1. Vorrichtung zur anaeroben Behandlung von Biomasse in einem Behälter, der flexible Materialstreifen als Bewuchsfläche für Mikroorganismen aufweist, dadurch gekennzeichnet, daß die Materialstreifen Kunststoffstreifen (16) sind, die im oberen Bereich des Behälters (1) aufgehängt und durch an ihren unteren Enden angreifende Gewichtskräfte gespannt sind.

2. Vorrichtung nach Anspruch 1, dadurch gekennzeichnet, daß die Schwerkraft auf die aufgehängten Kunststoffstreifen (16) vermittels Bongossiholzstangen, an denen die unteren Enden der Kunststoffstreifen (16) befestigt sind, einwirkt.

3. Vorrichtung nach Anspruch 1, dadurch gekennzeichnet, daß die unteren Enden der Kunststoffstreifen (16) zwischen Bongossiholzleisten (18') geklemmt sind, die durch Mutternschrauben (22) zusammengepreßt sind

4. Vorrichtung nach einem der Ansprüche 1 bis 4, dadurch gekennzeichnet, daß die Kunststoffstreifen (16) glatte oder geprägte Oberflächen aufweisen und selbst profiliert sind

5. Vorrichtung nach einem der Ansprüche 1 bis 4, dadurch gekennzeichnet, daß die oberen Enden der Kunststoffstreifen (16) an Stangen (15) befestigt sind, die wiederum mit ihren Enden auf Einbauten (14) im Innern des Behälters (1) aufliegen.

6. Vorrichtung nach Anspruch 1, dadurch gekennzeichnet, daß die unteren Enden (17) der Kunststoffstreifen (16) einzeln oder in Gruppen zusammengefaßt mit Gewichten belastet sind, die aus Metall, Stein oder Keramik bestehen.

## Claims

1. Apparatus for the anaerobic treatment of a biomass in a container, which includes flexible strips of material as culture surfaces for micro-organisms, characterised in that the strips of material are plastics material strips (16), which are suspended in the upper region of the container (1) and are tensioned by means of weights acting on their lower ends.

2. Apparatus according to claim 1, characterised in that the force of gravity acts on the suspended plastics material strips (16) through the intermediary of poles made of bongossi wood, to which the lower ends of the plastics material strips (16) are secured.

3. Apparatus according to claim 1, characterised in that the lower ends of the plastics material strips (16) are clamped between bars (18') made of bongossi wood, which are pressed together by means of female screw-threaded nuts (22).

4. Apparatus according to one of claims 1 to 4, characterised in that the plastics material strips (16) have smooth or embossed surfaces and are even profiled.

5. Apparatus according to one of claims 1 to 4, characterised in that the upper ends of the plastics material strips (16) are secured to poles (15) which, in turn, lie with their ends on components (14) in the interior of the container (1).

6. Apparatus according to claim 1, characterised in that the lower ends (17) of the plastics material strips (16) are individually loaded with weights or combined groups are loaded with weights, said weights being formed from metal, stone or ceramic material.

## Revendications

1. Dispositif pour le traitement anaérobie de biomasse dans une cuve qui comporte des bandes d'une matière flexible comme surface de développement des micro-organismes, caractérisé par le fait que les bandes de matière sont des bandes en matière plastique (16) qui sont suspendues dans la zone supérieure de la cuve (1) et qui sont tendues par des forces de gravité appliquées à leur extrémité inférieure.

2. Dispositif selon la revendication 1, caractérisé par le fait que la pesanteur agit sur les bandes en matière plastique suspendues (16) au moyen de barres en bois de bongossi auxquelles sont fixées les extrémités inférieures des bandes en matière plastique (16).

3. Dispositif selon la revendication 1, caractérisé par le fait que les extrémités inférieures des bandes en matière plastique (16) sont serrées entre des baguettes en bois de bongossi (18') qui sont forcées l'une contre l'autre par des boulons (22).

4. Dispositif selon l'une des revendications 1 à 3, caractérisé par le fait que les bandes en matière plastique (16) présentent des surfaces lisses ou gaufrées, et qu'elles sont elles-mêmes profilées.

5. Dispositif selon l'une des revendications 1 à 4, caractérisé par le fait que les extrémités supérieures des bandes en matière plastique (16) sont fixées à des barres (15) qui reposent à leur tour par leurs extrémités sur des pièces (14) rapportées à l'intérieur de la cuve (1).

6. Dispositif selon la revendication 1, caractérisé par le fait que les extrémités inférieures (17) des bandes en matières plastiques (16) sont chargées, individuellement ou en étant assemblées en groupes, au moyen de poids en métal, en pierre ou en céramique.

Fig. 1

Fig. 2

Fig. 3

Fig. 4

Fig. 5

Fig. 6

EP 0 304 734 B1